## Europäisches Patentamt
## European Patent Office
## Office européen des brevets

(19)

(11) Veröffentlichungsnummer: **0 068 303**
**B1**

(12) **EUROPÄISCHE PATENTSCHRIFT**

(45) Veröffentlichungstag der Patentschrift:
20.05.87

(51) Int. Cl.⁴: **C 01 B 31/32**

(21) Anmeldenummer: **82105266.9**

(22) Anmeldetag: **16.06.82**

(54) Verfahren zur Herstellung von Calciumcarbid.

(30) Priorität: 24.06.81 DE 3124672

(43) Veröffentlichungstag der Anmeldung:
05.01.83 Patentblatt 83/1

(45) Bekanntmachung des Hinweises auf die Patenterteilung:
20.05.87 Patentblatt 87/21

(84) Benannte Vertragsstaaten:
BE DE FR GB NL

(56) Entgegenhaltungen:
EP-A-0 020 957
EP-A-0 047 856
FR-A-1 164 312
US-A-3 017 259
US-A-3 044 858

(73) Patentinhaber: HOECHST AKTIENGESELLSCHAFT,
Postfach 80 03 20, D-6230 Frankfurt am Main 80
(DE)
Patentinhaber: RHEINISCHE
BRAUNKOHLENWERKE AG., Postfach 41 08 40,
D-5000 Köln 41 (DE)

(72) Erfinder: Kersting, Hans-Joachim, Dr., Zur Ville 7,
D-5020 Frechen (DE)
Erfinder: Wolfrum, Erhard, Dr., Neue Aue 6, D-5160
Düren (DE)
Erfinder: Portz, Willi, Dr., Zum Schlagbaum 2,
D-5042 Erftstadt (DE)
Erfinder: Strauss, Georg, Dr., Finkenweg 8, D-5042
Erftstadt (DE)

(74) Vertreter: Hubbuch, Klaus, Dr., Hoechst
Aktiengesellschaft WERK KNAPSACK Postfach
29 02, D-5030 Hürth (DE)

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

**Beschreibung**

Die Erfindung betrifft ein Verfahren zur Herstellung von Calciumcarbid durch Umsetzung von überschüssigem Koks mit gebranntem Kalk in feinkörniger Mischung und in Gegenwart von Sauerstoff in einem Sauerstoff-thermischen Ofen.

Die Herstellung von Calciumcarbid in Sauerstoff-thermischen Öfen ist bereits aus Chemie-Ingenieur-Technik 28 (1956), Seiten 4 - 5, bekannt.

Weiterhin beschreibt die DE-Offenlegungsschift 29 25 897 ein Verfahren zur Gewinnung von Calciumcarbid durch Umsetzung von Koks mit Kalk in Gegenwart von Sauerstoff in einen Sauerstoffthermischen Ofen, wobei man Kohle in einem Herdofen bei abgastemperaturen von mindestens 750°C verkokt, den so erhaltenen Koks mit der ihm noch innewohnenden Temperatur von über 500°C unmittelbar dem Sauerstoff-thermischen Ofenprozeß zuführt und in dem Sauerstoff-thermischen Ofen unter Zusatz von Kalk und Sauerstoff Calciumcarbid gewinnt.

Schießlich beschreibt die ältere, nicht vorveröffentlichte EP-A- 47 856 in Verfahren zur Herstellung von Calciumcarbid durch Umsetzung von überschüssigem Koks mit gebranntem Kalk in Gegenwart von Sauerstoff in einem Sauerstoff-thermischen Ofen, wobei man Kohle als Ausgangsstoff für Koks und Kalkhydrat (Ca (OH)$_2$) oder Kalkstein (CaCO$_3$) als Ausgangsstoff für gebrannten Kalk, beide in vorgebrochener Form, mischt, die Mischung in einer Trokkenzone bei 80 bis 120°C von anhaftendem (Wasser befreit und das warme Trockengut ummittelbar einem Calcinator zuführt, worin man unter Zuleiten von Luft bei Temperaturen von 900 bis 1400°C den Kohleanteil verkokt und zugleich den Kalkanteil dehydratisiert bzw. decarbonisiert, und wobei man die thermisch vorbehandelte Mischung der Ausgangsstoffe mit der ihr innewohnenden Temperatur von 900-1 000°C unmittelbar dem Sauerstoff-thermischen Ofen zuführt und dort in Gegenwart von Sauerstoff zu Calciumcarbid umsetzt.

In den beiden zuletzt genannten Fällen läuft das Verfahren hintereinander in verschiedenen Gefaßen, nämlich dem Calcinator bzw Herdofen und dem Sauerstoff-thermischen Ofen ab. Hierbei treten Probleme bei der Handhabung des umzusetzenden Materials auf, es entstehen großere Wärmeverluste und hohere Investitionskosten.

Überraschenderweise wurde nun gefunden, daß man die geschilderten Vorgänge auch in einem einzigen Reaktor ablaufen lassen kann, wobei sich die mit zusätzlichen Einrichtungen wie Brikettpressen, und dem Herdofen verbundenen höheren Investitionskosten, Betriebskosten und Wärmeverluste sowie die Schwierigkeiten beim Umgang mit heißen Feststoffen vermindern oder ganzlich ausschalten lassen. Fermer verringern sich die Aufwendungen zur Abhitzenutzung, die bei dem älteren Verfahren nur durch Dampferzeugung möglich ist, dadurch, daß große Wärmemengen ummittelbar zur Calinierung, d. h. Dehydratisierung und/oder Decarbonisierung der Ausgangsstoffe, sowie für die mit der Erzeugung von Sythesegas verbundenen endothermen Teilreaktionen genutzt werden.

Im einzelnen ist das Verfahren der Erfindung dadurch gekenzeichnet, daß man Koks und/oder kohlenstoffhaltige Rückstände aus der Erdölverarbeitung oder der Kohleverflüssigung Kohle, Braunkohle oder Torf als Ausgangsstoff für Koks und gebrannten Kalk und/oder Kalkyydrat (Ca(OH)$_2$) oder Kalkstein (CaCO$_3$) als Ausgangsstoff für gebrannten Kalk wobei der Einsatz von Koks und gebranntem Kalk allein ausgeschlossen ist, in der Sauerstoffthermischen Ofen in nur soweit vorgetrockneter und verkokter bzw. calcinierter Form einträgt, daß die für die Bildung von Calciumcarbid erforderliche Temperatur von 1800°s bis 2500°C gerade erreicht und aufrecht erhalten um als Nebenprodukt aus den flüchtigen Entgasungsprodukten der Ausgangsstoffe für Koks und den flüchtigen Zersetzungsprodukten von Kalkhydrat oder Kalkstein sowie aus den übrigen Ofenabgasen ein aus CO und H$_2$ bestehendes Synthesegas gewonnen wird, das im wesentlichen frei von Methan, Kohlendioxid Wasserdampf und Teer ist.

Darüberhinaus kann das Verfahren der Erfindung bevorzugt und wahlweise dadurch gekenzeichnet sein, daß man

a) Koks, gebrannten Kalk und/oder deren Ausgangsstoffe in Korgroßen von 0 bis 6 mm einsetzt;

b) die Ausgangsstoffe für Koks und gebrannten Kalk mit Gehalten an physikalisch und/oder chemisch gebundenem Wasser von bis zu 30 Gew% einsetzt;

c) Koks, gebrannten Kalk und/oder deren Ausgangsstoffe in feinkörmiger Mischung mit Hilfe von CO, CO$_2$ O$_2$, Wasserdampf in satter oder überhitzter Form oder im Kreislauf geführtem Sythesegas als Trägergas in den Sauerstoff-thermischen Ofen eindüst;

d) das den Sauerstoff-thermischen Ofen verlassende 1800° bis 2300°C heiße Synthesegas durch direktes Besprühen mit Wasser auf 800° bis 1 200°C abschreckt und in Abhängigkeit von der beabsichtigten Synthese mit Wasserdampf belädt;

e) das heiße Synthesegas mit ggf. teerhaltigen Kokerei-, Schwelerei- Gas- oder Reaktionswassern aus der Kohlehydrierung abschreckt, Zur Maximierung des Ausbringens am Synthesegas und des thermischen Wirkungsgrades des Verfahrens der Erfindung wird die Vorbehandlung des Kohlenstoffträgers durch Trocknung und Verkokung und evtl. zugleich des Calciumträgers durch Trocknung und Calcinierung, d. h. Dehydratisierung von Ca(OH)$_2$ und/oder Decarbonisierung von CaCO$_3$, nur soweit durchgeführt, daß die Flammentemperatur unter Berüksichtigung der erwähnten endothermen Vorgänge wie Trocknung, Verkokung bzw. Calcinierung, Carbidbildung und Sythesegaserzeugung bei der Reaktion mit Sauerstoff gerade oberhalb der Bildungstemperatur von CaC$_2$ liegt.

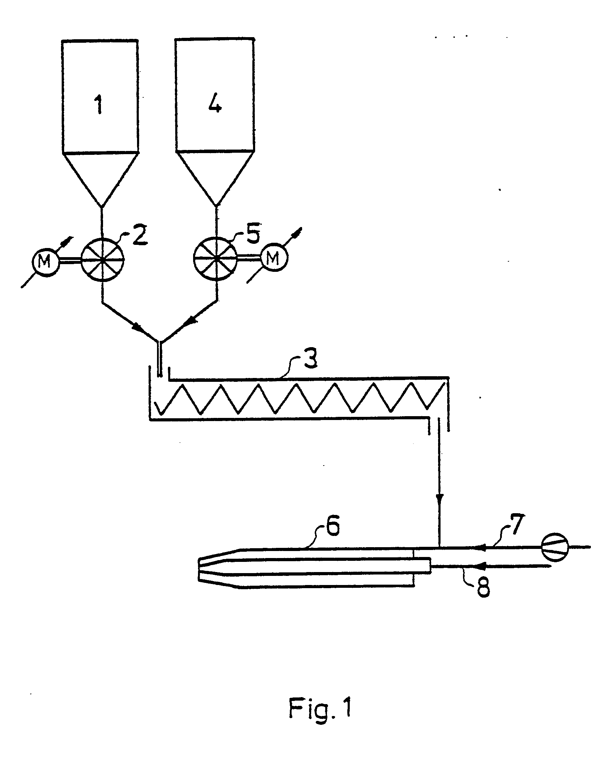

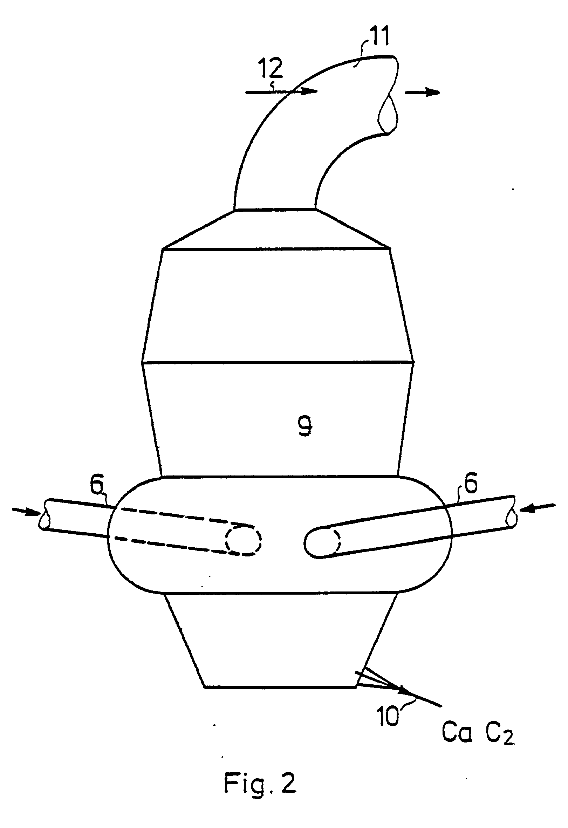

Gemäß Figur 1 und 2 der Zeichnung wird der Kohlenstoffträger, auch Schwarzmaterial genannt einem

2

Bunker 1 über ein Dosierorgan 2 entnommen und einem Mischer 3 zugeteilt. In gleicher Weise wird der Calciumträger auch Weißmaterial genannt, einem Bunker 4 über ein Dosierorgan 5 entnonnen und ebenfalls dem Mischer 3 zugeteilt. Als Schwarzmaterial kommen Kohle, Braunkohle, Torf, Koks sowie kohlenstoffhaltige Rückstände aus der Erdölverarbeitung oder der Kohleverflüssigung, als Weißmaterial CaO, Ca(OH)$_2$, CaCO$_3$ oder deren Gemische infrage. Schwarz- und Weißmaterial liegen in den Bunkern 1 bzw. 4 bereits in feinkörniger umd in nach Belieben vorgetrockneter und verkokter bzw. calcinierter Form vor. Mit Hilfe der Dosierorgane 2 und 5 steuert man die Zufuhr an Schwarz- und Weißmaterial, um ein stöchiometrisch und kalorisch ausgewogenes Mischungsverhältnis zu erhalten, wodurch bei der anschließenden Reaktion mit Sauerstoff die Erreichung und Aufrechterhaltumg der für die Bildung von Calciumcarbid erforderlichen Temperatur von 1800° bis 2300°C gewährleistet ist. Das gemischte Schwarz-/Weißmaterial gelangt sodann zur Brennerdüse 6. Zum Eintrag in diese Brennerdüse ist die Verwendung eines über Leitung 7 herangeführten Trägergases wie CO, CO$_2$, O$_2$, Wasserdampf in satter oder überhitzter Form oder im Kreisauf geführtes Synthesegas von Vorteil. Andererseits ist auch ein mechanischer Eintrag möglich.

Sauerstoff wird über Leitung 8 in die Brennerdüse 6 eingeführt, welche gemäß Figur 2 ein Bauteil des Sauerstoffthermischen Ofens bzw. Reaktors 9 ist. Es können eine oder mehrere Brennerdüsen 6 in tangentialer oder radialer Anordnung vorgesehen sein. Auch ist ein Eintrag unterhalb der Oberfläche des flüssigen CaC$_2$-Bads im Reaktor 9 möglich. Die in Figur 2 gezeigte tangentiale, nach unten geneigte Anordnung der Brernerdüse 6 weist Vorteile in Hinblick auf die Verwirbelung, kurze Verweilzeit der Reaktionskomponenten und Hitzeeinwirkung auf das CaC$_2$-Bad auf. Am Ende der Brennerdüsen 6 beginnt die Reaktion des Schwarz-/Weißmaterials mit dem Sauerstoff, wobei die Verbrennung des überschussigen Kohlenstoffs nach der Gleichung

$$2 C + O_2 \rightarrow 2CO + 221 \text{ Kilo-Joule}$$

bei der Temperaturlage von 1800 - 2300°C nur bis zum CO abläuft und die für den endothemen Vorgang der Bildung von CaC$_2$ nötige Emergie liefert:

$$462 \text{ Kilo-Joule} + CaO + 3C \rightarrow CaC_2 + CO.$$

Das flüssige CaC$_2$ verläßt den Reaktor 9 über die Abstichöffnung 10 kontinuierlich oder diskontinuierlich. Die gasförmigen Reaktionsprodukte verlassen den Reaktor 9 am Kopfende über den Gasabzug 1 1.

Das Oberteil des Reaktors ist zweckmäßig so ausgebildet, daß nur geringe Strömungsgeschwindigkeiten entstehen. Hierdurch erhalten mitgerissene Schlacke- und Staubpartikel Gelegenheit zur Koagulation und zum Zurückfallen in das CaC$_2$- Bad, so daß der Staubaustrag mininiert wird.

Die gasförmigen Reaktionsprodukte haben ebenfalls eine Temperatur von 1800 bis 2300°C. In diesem Temperaturbereich bringt die Ausnutzung der fühlbaren Wärme, besonders bei Gasen die wie das Synthesegasreich an CO und H$_2$ sind, Schwierigkeiten im Hinblick auf die Warmfestigkeit der Werkstoffe eines nachgeschalteten Wärmetauschers. Aus diesem Grund ist vorgesehen, die hohe Temperaturlage durch Quenchung über Leitung 12 auf eine werkstoffgerechte Höhe von z. B. 800 bis 1 200°C abzubauen. Quencht man mit Wasser, so besteht erfindungsgemäß die Möglichkeit, den Temperaturabbau dazu zu benutzen, die gasförmigen Reaktionsprodukte gleichzeitig zu Synthesegas fur z. B. die Fischer-Tropsch -Synthese oder die Methanolsynthese zu konvertieren. Hierbei reagiert der Wasserdampf nach der Gleichung

$$H_2O + CO \rightarrow H_2 + CO_2$$

zu Wasserstoff, während das CO$_2$ ausgewaschen wird. Auf diese Weise kann man z.B. ein Synthesegas mit 87 Vol% CO und 12 Vol% H$_2$ erhalten.

Vorteilhaft ist die Quenchung mit ggf. teerhaltigen Kokerei- Schwelerei-, Gas- oder Reaktionswässern aus der Kohlehydrierung, sofern diese Wässer in überbrückbarer Entfernung zum Reaktor anfallen. Derartige Wasser sind bisher nur durch kostspielige Vorkehrungen wie Phenosolvan-Anlagen oder biologische Aufbereitung zu nutzen bzw. abzuleiten. Durch Verwendung solcher Wässer zur Quenchung im angegebenen Temperaturbereich werden alle organischen Inhaltsstoffe dieser Wässer zu CO, CO$_2$ und H$_2$ gespalten und sind bei der den Wärmetauscher folgenden Gaskonvertierung zur Synthese nutzbar.

Beispiel 1 (Verleichsbeispiel entsprechend Beispiel 1 der EP-A- 47 856 Gasvolumina gemessen bei 1,013 bar und 273,15 K)

136,54 t/h Rohbraunkohle (Wassergehalt 60 Gew%) werden auf eine Korngröße von 0 - 10 mm gemahlen, mit 19,9 t/h Kalkyldrat ( Korngröße 0 - 10 mm, 2 Gew.% Restfeuchte) gemischt und die Mischung in einer Trockenzone zu 63,75 t/h Trockenkohle (Wassergehalt 14 Gew%,) und 19,5 t/h Kalkhydrat getrocknet. Hierzu wird die Trockenzone mit 108,6 t/h Niederdruckdampf von 5 bar und 180°C beaufschlagt, während 73,19 t/h Brüden und 108,6 t/h Kondensat abströmen. Dem Kondensat werden 71,4 t/h Speisewasser zugeschlagen, das Gemisch (180 t/h) unter einen Druck von 90 bar gesetzt, in einem Wärmetauscher auf 177°C vorgewannt und durch die Heizschlange in Abhitzekessel geleitet.

Die Trockenkohle/Kalkhydrat-Mischung wird in Herdofen mit 122.130 m$^3$/h Luft verkokt bzw. calciniert, wobei eine Mischung aus 23,51 t/h Koks und 14,74 t/h CaO entsteht und dem Sauerstoff-thermischen Carbidofen zugeführt wird. Unter Einblasung von 13.789 m$^3$/h Sauerstoff (98 % entstehen dort bei etwa 2000°C 12,82 t/h Calciumcarbid (Normalcarbid mit 80 Gew% CaC$_2$) sowie 37,069 m$^5$/h Abgas von 600°C. Aus dem Abgas werden 4,16 t/h Staub abgeschieden und in das Verfahren zurückgeführt. Nach Durchströmen des Wärmetauschers hat das Abgas noch eine Temperatur von 200°C.

Die heißen Abgase des Herdofens heizen das durch die Heizschlange im Abhitzekessel strömende Speisewasser (180 t/h, 177°C, 90 bar) auf 492°C auf, so daß es als überhitzter Hochdrckdampf vorliegt mit dessen Hilfe via Gegendruckturbine und Generator 19,1 Megawatt Überschußstrom erzeugt und 79.451 m$^3$/h

3

Luft in 13.789 m$^3$/h O$_2$ und 65.662 m$^3$/h N$_2$ zerlegt werden. Auf der Gegenseite der Turbine fallen 180 t/h Niederdruckdampf von 180°C und 5 bar an, wovon 108,6 t/h in die Trockenzone gelangen. Die restlichen 71,4 t/h strömen einer weiteren Turbine mit Generator zu, wodurch 4,27 Megawatt Überschußstrom erzeugt werden. Insgesamt fallen bei dies em Verfahren 19,10 + 4,27 = 23,57 MW Strom an.

Beispiel 2 (Gemäß Figur 1 und 2 der Erfindung; Gasvolumina gemessen bei 1,013 bar und 273,15 K)

Es werden 93 t/h einer auf 14 Gew% Restwassergehalt vorgetrochneten Braunkohle und 19,2 t/h trockenes Kalkhydrat, beide in einer Korngröße von 0 - 6 mm, gemischt und zusammen mit etwa 1 000 m$^3$/h von im Kreislauf gefürtem Synthese-Rohgas als Trägergas und 25000 m$^3$/h Sauerstoff (98 %) durch die Brennerdüse 6 in den Reaktor 9 eingeführt. Die Umsetzung erfolgt dort bei etwa 2000°C. Es entstehen 12,82 t/h Calciumcarbid (Normalcarbid mit etwa 80 Gew% CaC$_2$), die aus der Abstichöffnung 10 abgelassen werden, sowie 150 000 m$^3$/h Synthese-Rohgas bestehend aus 59 Vol% CO, 40 Vol% H$_2$ 1 Vol% CO$_2$, N$_2$. Mit dem Rohgas entweichen 1 80 Giga-Joule fühlbare Wärme welche für die Rohgaskonvertierung und/oder nachfolgende Prozesse ( Fischer -Tropsch, Methanolsynthese) nutzbar sind.

## Patentansprüche

Verfahren zur Herstellung von Calciumcarbid und Synthesegas (CO + H$_2$) durch Umsetzung von überschüssigem Koks mit gebranntem Kalk in feinkörniger Mischung und in Gegenwart von Sauerstoff in einem Sauerstoff-thermischen Ofen, <u>dadurch gekennzeichnet</u>, daß man Koks und/oder kohlenstoffhaltige Rückstände aus der Erdölverarbeitung oder der Kohleverflüssigung, Kohle, Braunkohle oder Torf als Ausgangsstoff für Koks und gebrannten Kalk und/oder Kalkhydrat (Ca (OH)$_2$) oder Kalkstein (CaCO$_3$) als Ausgangsstoff für gebrannten Kalk, wobei der Einsatz von Koks und gebrenntem Kalk allein ausgeschlossen ist, in den Sauerstoff-thermischen Ofen in nur soweit vorgetrockneter und verkokter bzw. calcinierter Form einträgt, daß die für die Bildung von Calciumcarbid erforderliche Temperatur von 1800° bis 2300°C gerade erreicht und aufrecht erhalten und als Nebenprodukt aus den flüchtigen Entgasungsprodukten der Ausgangsstoffe für Koks und den flüchtigen Zersetzungsprodukten von Kalkhydrat oder Kalkstein sowie aus den übrigen Ofenabgasen ein aus CO und H$_2$ bestehendes Synthesegas gewonnen wird, das im wesentlichen frei von Methan, Kohlendioxid, Wasserdampf und Teer ist.

2. Verfahren nach Anspruch 1, <u>dadurch gekennzeichnet</u> daß man Koks, gebranten Kalk und/oder deren Ausgangsstoffe in Korngrößen von 0 bis 6 mm einsetzt.

3. Verfahren nach Anspruch 1 oder 2, <u>dadurch gekennzeichnet</u>, daß man die Ausgangsstoffe für Koks und gebrannten Kalk mit Gehalten an physikalisch und/oder chemisch gebundenem Wasser von bis zu 30 Gew einsetzt.

4. Verfahren nach einem der Ansprüche 1 - 3 <u>dadurch gekennzeichnet</u>, daß man Koks gebrannten Kalk und/oder deren Ausgangsstoffe in feinkörniger Mischung mit Hilfe von CO, CO$_2$ O$_2$, Wasserdampf in satter oder überhitzter Form oder in Kreislauf gefuhrten Synthesegas als Trägergas in den Sauerstoff-thennischen Ofen eindüst.

5. Verfahren nach einem der Ansprüche 1 - 4 <u>dadurch gekennzeichet</u>, daß man das den Sauerstoff-thermischen Ofen verlassende 1800° bis 2300°C heiße Synthesegas durch direktes Besprühen mit Wasser auf 800° bis 1200°C abschreckt und in Abhangigkeit von der beabsichtigten Synthese mit Wasserdampf beladt.

6 Verfahren nach Anspruch 5 <u>dadurch gekennzeichnet</u>, daß man das heiße Synthesegas mit ggf. teerhaltigen Kokerei-, Schwelerei- Gas-, oder Reaktionswässenn aus der Kohlehydrierung abschreckt.

## Claims

1. Process for making calcium carbide and synthesis gas (CO + H$_2$) by reacting an excess of coke with quicklime in the form of a fine particulate blend and in the presence of oxygen in an oxygen-thermal furnace, which comprises: introducing, into the oxygen-thermal furnace, coke and/ or carbonaceous residues originating from petroleum refining or coal liquefaction, coal, lignite or peat as starting material for the coke, and quicklime and/or lime hydrate (Ca(OH)$_2$) or limestone (CaCO$_3$) as starting material for the quicklime, with exclusion of the use solely of coke and quicklime, in the form of material predried and coked or calcined to an extent such that the temperature of 1800 - 2300°C necessary for calcium carbide formation is just reached and maintained, and that a synthesis gas consisting of CO and H$_2$ substantially free from methane, carbon dioxide, steam and tar is recovered as a by-product from the volatile degasification products of the starting materials for coke and from the volatile decomposition products of lime hydrate or limestone, and further furnace gases.

2. Process as claimed in claim 1, wherein the coke, quicklime and/or their starting materials are used in the form of particles with a size of up to 6 mm.

3. Process as claimed in claim 1 or 2, wherein the starting materials for coke and quicklime contain up to 30 weight % physically and/or chemically combined water.

4. Process as claimed in any of claims 1 to 3, wherein coke, quicklime and/or their starting materials are used in the form of a fine particulate blend and injected with the aid of CO, CO$_2$, O$_2$, saturated or superheated steam or recycled synthesis gas as a carrier gas into the oxygen-thermal furnace.

5. Process as claimed in any of claims 1 to 4, wherein the hot synthesis gas of 1800°C to 2300°C coming from the oxygen-thermal furnace is quenched to 800 to 1200°C by directly contacting it with water and charged with steam in accordance with the synthesis targeted.

6. Process as claimed in claim 5, wherein the hot synthesis gas is quenched with coke plant waters, low temperature carbonization plant waters, gas scrubbing waters or reaction waters originating from the hydrogenation of coal, containing tar, if any.

## Revendications

1. Procédé de préparation de carbure de calcium et de gaz de synthèse (CO + $H_2$) par réaction d'un excès de coke avec de la chaux vive en mélange à grains fins et en présence d'oxygène dans un four oxygéno-thermique, caractérisé en ce que l'on introduit, dans le four oxygéno-thermique, du coke et/ou des résidus carbonés provenant du traitement ou pétrole ou de la liquéfaction de la houille, du charbon, du lignite ou de la tourbe comme matière de départ pour le coke et de la chaux vive et/ou de la chaux hydratée ($Ca(OH)_2$) ou du calcaire ($CaCO_3$) comme matière de départ pour la chaux vive, à l'exclusion de l'utilisation de coke et de chaux vive seuls, sous forme pré-séchée et cokéfiée ou calcinée à un degré tel que la température de 1 800- 2 300°C nécessaire pour la formation du carbure de calcium soit juste atteinte et maintenue et que l'on récupère, comme sous-produit, des produits de dégazage volatils des matières de départ du coke, des produits de décomposition volatils de la chaux hydratée ou du calcaire ainsi que d'autres gaz sortant du four, un gaz de synthèse consistant en CO et $H_2$ et étant essentiellement exempt de méthane, d'anhydride carbonique, de vapeur d'eau et de goudron.

2. Procédé selon la revendication 1, caractérisé en ce que l'on utilise le coke, la chaux vive et/ou leurs matières de départ sous forme de particules de dimensions allant jusqu'à 6 mm.

3. Procédé selon la revendication 1 ou 2, caractérisé en ce que l'on utilise les matières de départ du coke et de la chaux vive à des teneurs en eau liée chimiquement et/ou physiquement allant jusqu'à 30 % en poids.

4. Procédé selon l'une des revendications 1 - 3, caractérisé en ce que l'on injecte un mélange à grains fins de coke, de chaux vive et/ou de leurs matières de départ dans le four oxygéno-thermique à l'aide de CO, de $CO_2$, de $O_2$, de vapeur d'eau saturée ou surchauffée ou gaz de synthése recyclé comme gaz porteur.

5. Procédé selon l'une des revendications 1 - 4, caractérisé en ce que, par projection directe d'eau, on refroidit brusquement à 800-1 200°C le gaz de synthése sortant du four oxygéno-thermique à une température de 1 800-2 300°C et on le charge de vapeur d'eau selon la synthése envisagée.

6. Procédé selon la revendication 5, caractérisé en ce que l'on refroidit brusquement le gaz de synthèse chaud avec des eaux de cokerie, des eaux de carbonisation à basse température, des eaux usées de lavage de gaz ou des eaux de réaction de la liquéfaction de la houille, contenant éventuellement du goudron.

Fig. 1

Fig. 2